(19) Europäisches Patentamt
European Patent Office
Office européen des brevets

(11) **EP 2 960 827 A1**

(12) **EUROPEAN PATENT APPLICATION**

(43) Date of publication:
**30.12.2015 Bulletin 2015/53**

(51) Int Cl.:
***G06K 9/00*** *(2006.01)*

(21) Application number: **15165780.6**

(22) Date of filing: **29.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.06.2014 DE 102014109063**

(71) Applicant: **Connaught Electronics Ltd.**
**Tuam, County Galway (IE)**

(72) Inventors:
• **Rammos, Perikles**
  **Dublin 8 (IE)**
• **Voros, Robert**
  **Budapest (HU)**

(74) Representative: **Jauregui Urbahn, Kristian**
  **Valeo Schalter und Sensoren GmbH**
  **CDA-IP**
  **Laiernstraße 12**
  **74321 Bietigheim-Bissingen (DE)**

(54) **METHOD FOR DETECTING AN OBJECT WITH A PREDETERMINED GEOMETRIC SHAPE IN AN ENVIRONMENTAL REGION OF A MOTOR VEHICLE**

(57)     The invention relates to a method for detecting an object (24), which has a predetermined geometric shape and is located in an environmental region of a motor vehicle (1). The detection is effected by means of a camera system (2) of the motor vehicle (1). An image of the environmental region is provided by means of a camera (3) of the camera system (2). Then, a gradient image (22) is generated from the image by means of an image processing device (4) of the camera system (2), thus in particular an edge image. The image processing device (4) then determines at least one regression function (29) from edges (19) of the gradient image (22), wherein a function is used as the regression function (29), which has a shape corresponding to the geometric shape of the searched object (24). Then, transformation of the regression function (29) from an image space (28) of the gradient image (22) into a parameter space (31) is effected using a predetermined transformation rule of the image processing device (4), for example a Hough transformation. The detection of the object (24) is then effected based on the transformed regression function (29) in the parameter space (31).

Fig.1

EP 2 960 827 A1

**Description**

The invention relates to a method for detecting an object with a predetermined geometric shape in an environmental region of a motor vehicle by means of a camera system of the motor vehicle. In the method, at least one image of the environmental region is provided by means of a camera of the camera system, wherein the detection is effected based on the image. In addition, the invention relates to a camera system for a motor vehicle, which is formed for performing such a method, as well as to a motor vehicle with such a camera system.

Camera systems for motor vehicles detecting objects with a predetermined geometric shape in the environmental region of the motor vehicle are already known from the prior art. On the one hand, this can be effected with a shape matching method, in which a stored template is compared to an image of the environmental region currently captured by the camera. Herein, predetermined shapes are searched in a camera image - for example by means of cross-correlation. On the other hand, alternatively, the detection can also be effected with a transformation into a parameter space - in particular a Hough transformation - as it is known from the printed matter US 3 069 654 A. In this case, first, a gradient image is calculated from the camera image; this implies that pixels belonging to edges are determined and subsequently represented as a binary image. In a further step, then, a transformation of the gradient image into a Hough space, which represents a parameter space, is iteratively effected. This is effected via a voting process, in which each pixel of the gradient image contributes to each line crossing the pixel with each one vote. These lines are present as sinusoidal curves in the Hough space. In order to find the searched object in the Hough space, now, the lines are selected, which have obtained particularly many votes in the voting process. In a slight modification of this method, another geometric object as for example a circle can also be used instead of a line.

It is disadvantageous in the mentioned prior art that the shape matching method requires an exact template of the searched object in a database. This results in the method often not robustly operating because for example the scaling of the current camera image does not exactly coincide with that of the template. In addition, a severe restriction with respect to the generality is to be accepted: In case the object to be detected has slightly changed features with respect to the template, an error can occur in the detection. Here, the above mentioned Hough transformation provides a remedy. It is not dependent on an exact template of the searched object. For example, a searched line can extend over a length to be determined in a certain range: a fact, which increases the generality of the method. Furthermore, the Hough space is known to be robust. However, a disadvantage of the Hough transformation is the high computational effort due to an extremely iterative procedure. In other words, the Hough transformation is a brute force method.

It is the object of the invention to demonstrate a solution, how in a method of the initially mentioned kind the computational effort in detecting the object, in particular in a transformation into a parameter space, can be reduced compared to a conventional Hough transformation.

According to the invention, this object is solved by a method, by a camera system as well as by a motor vehicle having the features according to the respective independent claims. Advantageous implementations of the invention are the subject matter of the dependent claims, of the description and of the figures.

A method according to the invention serves for detecting an object having a predetermined geometric shape and located in an environmental region of a motor vehicle. The detection is effected by means of a camera system of the motor vehicle. An image of the environmental region is provided by means of a camera of the camera system. Then, a gradient image is generated from the image by means of an image processing device of the camera system, thus in particular an edge image. The image processing device then determines at least one regression function from edges of the gradient image, wherein a function is used as the regression function, which has a shape corresponding to the geometric shape of the searched object. Then, transforming the regression function from an image space of the gradient image into a parameter space is effected using a predetermined transformation rule by the image processing device, for example a Hough transformation. The detection of the object is then effected based on the transformed regression function in the parameter space and thus based on elements of the parameter space.

Accordingly, according to the invention, it is proposed not to directly transform the pixels of the gradient image into the parameter space, but first to introduce a pre-processing step. In this pre-processing step, the pixels of the gradient image belonging to edges are approximated by at least one regression function. Subsequently, this regression function itself can be transformed into the parameter space, and it does not have to be iterated over all of the pixels anymore, but only over the regression function.

The method according to the invention has the advantage that by the introduction of the regression function approximating the course of contours of the searched object and representing a so-called skeleton in this manner, a functional representation of the edges of the gradient image is allowed. This functional representation then allows transformation into the parameter space with particularly low computing time. Overall, the detection of the objects can therefore be effected without much computational effort such that an image processing device (DSP) with restricted computational power can also be employed and yet the detection of the object can be performed in real time.

Presently, an - in particular color sensitive - image capturing device is understood by a camera, which is formed for capturing light in the visible spectral range and thus is able to provide images of the environmental region. For example, a CCD camera or a CMOS camera can be employed as the camera. In particular, the camera is also a video camera, which provides a temporal sequence of images of the environmental region and communicates it to the image processing device.

In an embodiment, a roadway marking applied to a roadway is detected as the object. In this context, it can be provided that a parking space marking delimiting a parking space and/or a roadway longitudinal marking delimiting a lane is detected by the camera system as the object. This is an advantageous application because these roadway markings can be particularly well approximated with a linear regression function. Thus, the camera system can for example particularly advantageously be used as a lane departure warning system and/or as a parking assist system.

In an embodiment, an object with at least one rectilinear contour is detected, wherein a rectilinear and thus linear function is used as the regression function. This has the advantage that this rectilinear function can be simply and fast calculated and rectilinear street markings - such as parking space markings and/or roadway longitudinal markings - can be described and detected without much computational effort.

Additionally or alternatively, an object with at least one oval, in particular circular, contour can be detected, wherein an oval, in particular circular, function is then used as the regression function. For example, this function can be used to describe a component, in particular a wheel or the like, of another object participating in traffic.

Further additionally or alternatively, an object with a T-shaped and/or L-shaped contour can be detected, wherein a combination of rectilinear functions is used as the regression function in this case. It is advantageous that a majority of the typical parking space markings can be described with these shapes.

Preferably, a transformation rule for line elements is used as the transformation rule for transforming the regression function. This means that not separately the pixels of the gradient image, but the entire regression function is taken as a basis for the transformation. This has the advantage that the transformation proceeds more effectively because a vote does not have to be given for each pixel in the parameter space, but a parameter of the functional representation in the image space can be simply transformed or converted into the parameter space.

In particular, it is provided that a Hough transformation is used as the transformation rule such that the parameter space corresponds to a Hough space. This has the advantage that it can be resorted to the robustness of a Hough space.

Preferably, transforming the regression function includes a kernel density estimation. This means that each transformed pixel does not only contribute to a coordinate or element in the parameter space, but also to a certain area around the element. The area around the element is determined with a kernel underlying the kernel density estimation. Possible kernels are for example a Gaussian kernel, a Cauchy kernel, a Picard kernel or an Epanechnikov kernel. The advantage in this procedure is increased robustness in establishing the Hough space.

In a further embodiment it is provided that the detection of the object in the parameter space includes that values of the parameter space are combined to clusters using a clustering method and the clusters are extracted. The combination to clusters can for example be effected with a mean shift algorithm. Herein, a better interpretability of the Hough space is advantageous; this serves for that searched objects can be more precisely and less error-prone extracted from the Hough space.

Additionally or alternatively, it can be provided that the detection of the object in the parameter space includes that values of the parameter space are extracted using a non-maximum suppression method. The non-maximum suppression method is often employed in association with edge detection methods. The image is scanned along the gradient direction and, if pixels are not a part of a local maximum, these pixels are set to zero. This has the effect that all of the pixels, which are not a part of the local maximum, are suppressed. The better interpretability of the Hough space is advantageous; this in turn serves for that searched objects can be more precisely and less error-prone extracted from the Hough space.

Additionally or alternatively, it can be provided that the detection of the object in the parameter space includes that values of the parameter space are compared to a predetermined threshold value and extracted depending on the comparison for detecting the object. The effect is a reduction of the elements in the Hough space. This approach too has the advantage that searched objects can be better extracted from the Hough space.

In particular, it is provided that points of intersection of the regression function on the one hand with the edges of the gradient image on the other hand are determined in the image space and transformed into the parameter space. Then, a progression of the transformed regression function in the parameter space can be determined considering the transformed points of intersection. By this approach, the parameter space can be extended with a starting point and an endpoint such that the line can be more precisely determined using the starting point and the endpoint in the Hough space. Hereby, an infinitive straight line for example becomes a limited line segment with a starting point and an endpoint. The advantage is in the additional information content of the Hough space. Hereby, objects can in turn be more precisely extracted from the Hough space.

A camera system according to the invention for a motor vehicle is formed for performing a method according to the invention. The camera system for a motor vehicle includes at least a camera for providing an image of an environmental region of the motor vehicle and an image processing device, which is adapted to perform a method according to the invention.

A motor vehicle according to the invention, in particular a passenger car, includes a driver assistance system according to the invention.

The preferred embodiments presented with respect to the method according to the invention and the advantages thereof correspondingly apply to the camera system according to the invention as well as to the motor vehicle according to the invention. Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:

Fig. 1 in schematic illustration a plan view of a motor vehicle with a camera system according to an embodiment of the invention, wherein the motor vehicle is parked into a parking space;

Fig. 2 in schematic illustration a plan view of the motor vehicle, which travels on a multi-lane road, wherein the surrounding roadway markings are detected by means of the camera system;

Fig. 3 a flow diagram of a method according to an embodiment of the invention;

Fig. 4 an exemplary image of an environmental region of the motor vehicle provided by a camera of the camera system;

Fig. 5 an exemplary binary image, in which edges in horizontal direction are detected;

Fig. 6 an exemplary binary image, in which edges in vertical direction are detected;

Fig. 7 an exemplary binary image, in which line elements or center lines each calculated by means of a regression function based on the horizontal and the vertical edges are illustrated;

Fig. 8 a binary image of Fig. 4, in which the line elements and center lines, respectively, which are each calculated by means of a regression function based on the horizontal and the vertical edges, are illustrated; and

Fig. 9 an illustration of a parameter space with the origin top left, abscissa $\rho$ and ordinate $\theta$, in which a kernel density estimation was utilized for establishing.

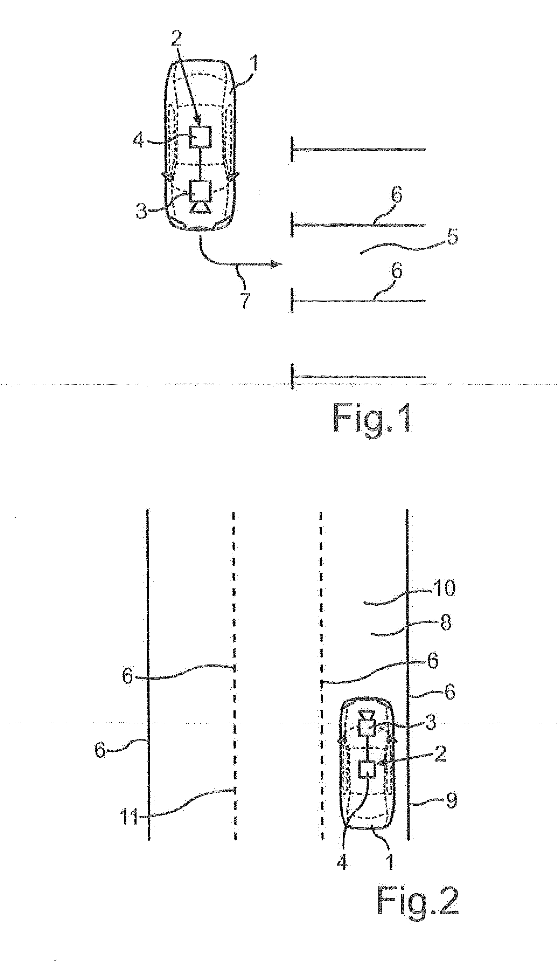

In Fig. 1, a plan view of a motor vehicle 1 with a camera system 2 is schematically illustrated, which includes a camera 3 and an image processing device 4. The motor vehicle 1 is parked into a parking space 5 according to arrow representation 7, which is delimited by roadway markings 6. The roadway markings 6 according to Fig. 1 therefore represent parking space markings. Herein, the roadway markings 6 are detected by the camera system 2, wherein this detection is effected by the image processing device 4 based on an image, which is provided by the camera 3 and communicated to the image processing device 4. For example, the camera system 2 is a part of a driver assistance system, which provides additional information such as the presence and the position of the parking space 5 to a driver of the motor vehicle 1 in order to allow a more precise, more comfortable and more secure parking operation. Optionally, the camera system 2 can also be associated with a parking assist system, which is formed for automatic or semi-autonomous parking of the motor vehicle 1.

In Fig. 2, the motor vehicle 1 is also shown in a schematic plan view. The motor vehicle 1 is on a three-lane roadway or road 8, on which roadway markings 6 are applied as roadway longitudinal markings. A solid line roadway marking 9 indicates the lateral end of the road 8, while dashed line roadway markings 11 delimit lanes 10 from each other. The camera system 2 detects the roadway markings 6 and thus can assist the driver in keeping the motor vehicle 1 in the respective lane 10 and thus possibly avoiding a risk of accident by unintentionally exiting the lane 10.

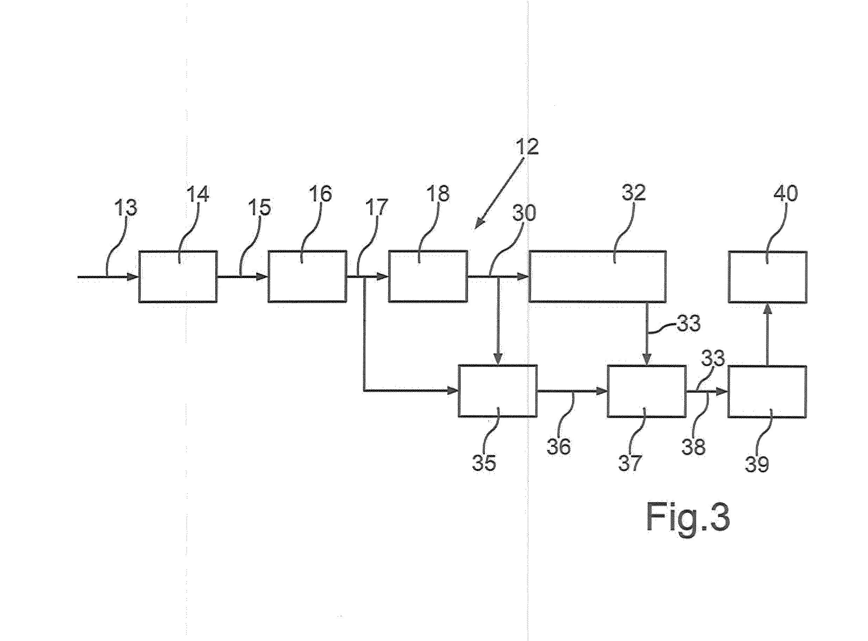

Furthermore, the exemplary procedure of the method is explained based on a program flow diagram 12 shown in Fig. 3. First, the grey level channel of an input image 13, which is presently captured with a fish eye lens, is converted to a plan view image 15 with the aid of look-up tables 14. The look-up tables 14 include geometric data of the camera 3. The conversion can for example be performed by means of a nearest neighborhood interpolation method. Alternatively to the nearest neighborhood interpolation method, a bilinear interpolation is also possible. The bilinear interpolation incorporates intensity values of surrounding pixels of the input image 13 in the interpolation method in order to obtain a correspondingly weighted pixel thereby better matched to the environment of the pixel in the plan view image 15.

In the next process step 16, the plan view image 15 is smoothed with a smoothing filter, for example a Gaussian filter or a locally adapted smoothing filter, and the histogram of the plan view image 15 is equalized. The smoothing filter results in small high-frequency areas in the plan view image being eliminated and not remaining as disturbing artifacts for the following steps. The histogram equalization results in the entire range of values of the plan view image 15, for example 8 bits, being uniformly exploited. This is in particular interesting if light conditions exist at the time of image capture, for which the camera is not pre-configured and thus is subjected to under- or overexposure. Subsequently, an adaptive threshold value method is applied to the plan view image 15, which has a binary image 17 as the result. The binary image 17 is denoised with a morphologic method, in particular an opening or closing, to clean it up from small artifacts.

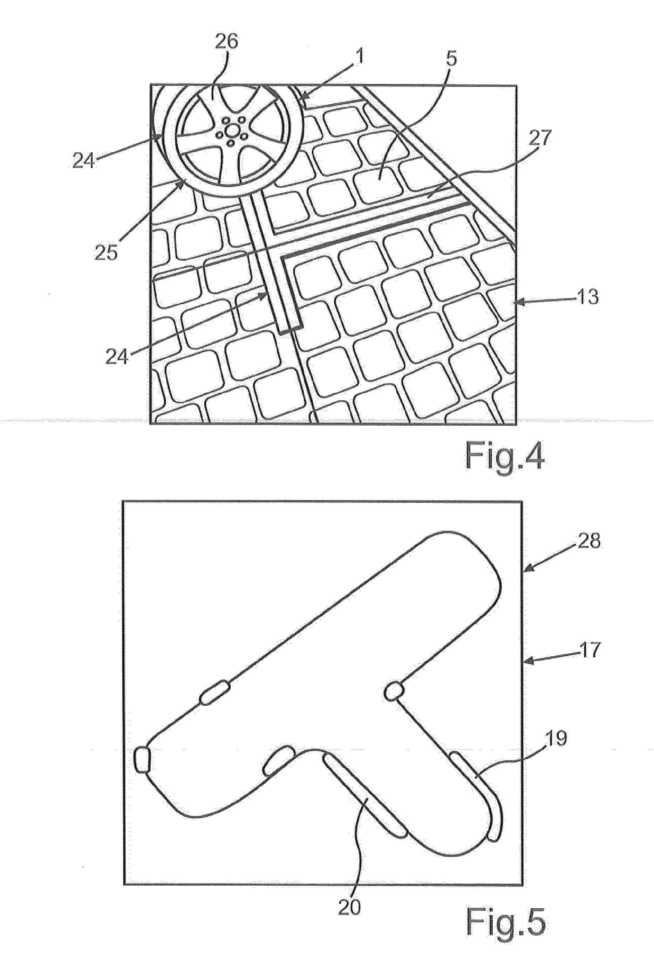

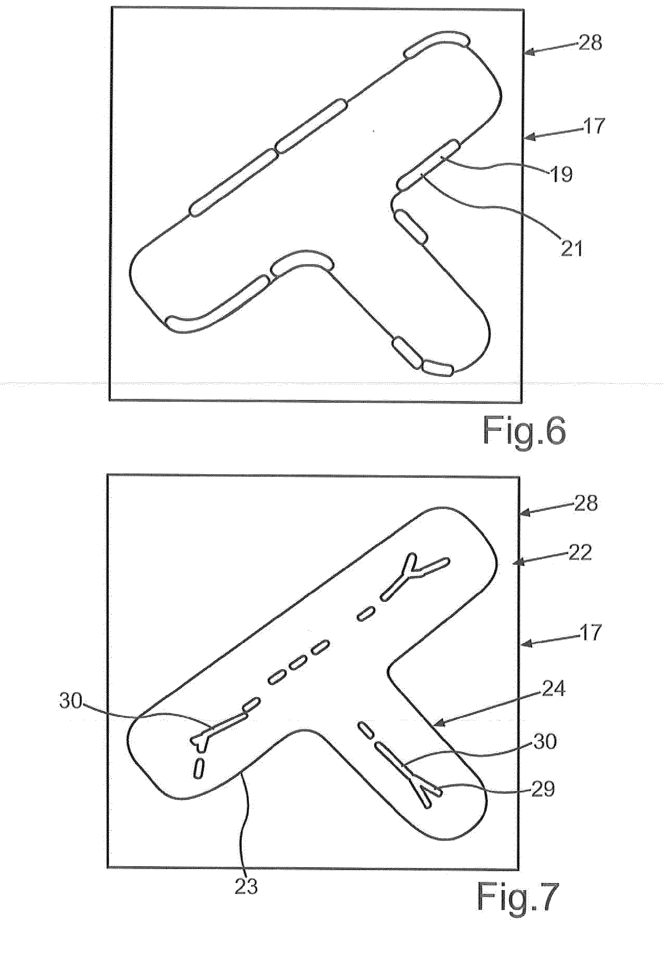

Thereafter, in the process step 18, edges 19 are now extracted in this binary image 17. First, this is effected for all of the horizontally extending edges 20, as shown in Fig. 5, and subsequently for all of the vertically extending edges 21, as shown in Fig. 6. By combining the horizontal edges 20 and the vertical edges 21, an overall gradient image 22 arises, as it is exemplarily shown in Fig. 7. The gradient image 22 shows all of the high-frequency areas in the binary image 17, i.e. pixels with a certain change of the intensity compared to adjacent pixels. The gradient image 22 can for example be generated with a Sobel operator, which is applied horizontally and vertically and optionally additionally also diagonally. The Canny edge detector, which also incorporates the Sobel operator, presents a further method to calculate the gradient image 22.

Now, the gradient image 22 has contours 23 or outlines of objects 24 (compare also Fig. 4) in the binary image 17, wherein one of the contours 23 can be composed of multiple edges 19.

Also in process step 18, based on the gradient image 22, which is in an image space 28, a regression function 29 is calculated. The contour 23 of the respective object 24 is approximated by at least one such regression function 29. The basic shape of the regression function 29 is determined in advance, thus, for example, a rectilinear function, an elliptical function, a combination of several rectilinear or elliptical functions or the like is possible. As a result of this regression step, one obtains at least one line element 30 in the form of a center line extending through the center of the contour 23, as is seen in Fig. 7. The process is similar to that of a skeletonization, but less computationally intensive than this.

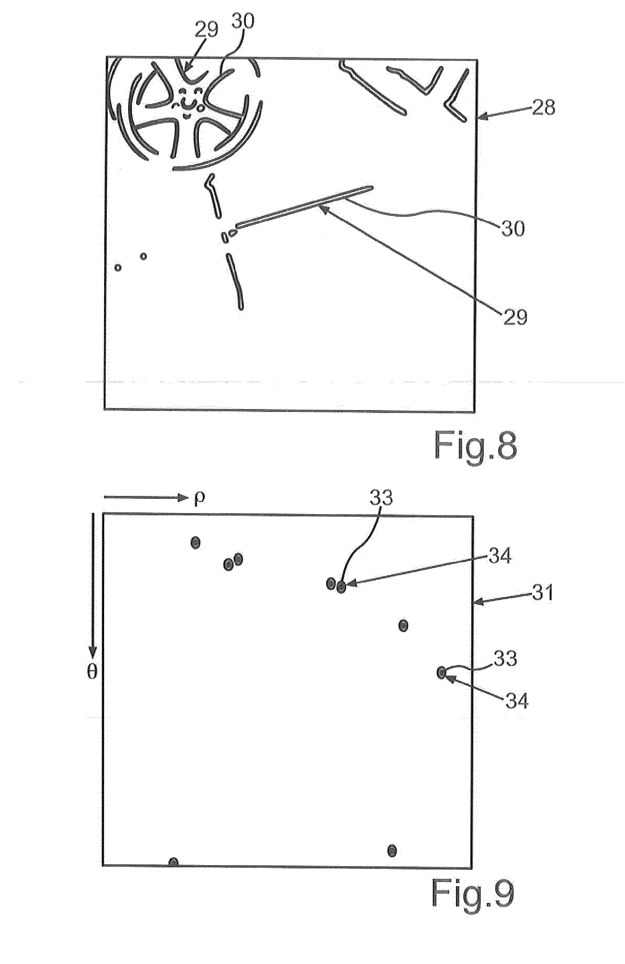

The result of the preceding steps is exemplarily shown in Fig. 4 and Fig. 8. In Fig. 4, an exemplary input image 13 is shown, which includes objects 24 in the form of a wheel 25 with a rim 26 and a parking space marking 27. The parking space marking 27 has a T shape and delimits the parking space 5 in two directions. The corresponding binary image 17 with extracted line elements 30 is shown in Fig. 8. The line elements 30 are clearly seen, which originate from the rim 26 or the parking space marking 27.

The present regression functions 29 are now transformed into a parameter space 31, which is exemplarily illustrated in Fig. 9. The parameter space 31 is a Hough space in the embodiment. The transformation can be mathematically represented as follows if the regression function 29 is for example present in the form of a straight line:

$$y = ax + b \rightarrow \theta = \cot^{-1}(-a), \ \rho = b \cdot \sin(\theta);$$

$$x = ay + b \rightarrow \theta = \tan^{-1}(-a), \ \rho = b \cdot \cos(\theta);$$

wherein:

x and y define the coordinate in the image coordinate system,
a denotes the slope of the regression function 29,
b is the shift constant of the regression function 29, and
$\theta$ and $\rho$ define the coordinate in the parameter space 31.

On the left side of the arrow shown in the above equation, the regression function 29 in the image space 28 and on the right side of the arrow, the conversion of the parameters a and b of the regression function 29 into the parameter space 31 or the Hough space is described, which is defined by $\theta$ and $\rho$.

In a voting process, which proceeds corresponding to the original Hough transformation, now, the votes of the line elements 20 for each element 33 in the parameter space 31 are accumulated in order to be able to evaluate the intensity or importance of an element 33 and thus of an object 24 in the binary image 17. The number of the votes for a certain element 33 is determined depending on a length of the line elements 30, which give votes for the element 33. The length can be determined either via the number of the pixels or via the distance between starting and endpoint of the line element 30. The length can also be included in the parameter space 31 as a parameter.

The advantage of this approach compared to a conventional Hough transformation is that less computational power has to be expended for the transformation from the image space 28 to the parameter space 31. A reason for this is that not every single pixel of the binary image 17 is transformed into the parameter space 31, but only each single line element 30, i.e. each single regression function 29. In addition, the parameter space 31 is "cleaner" compared to a conventional Hough space, i.e. there are less elements 33 in it, which results in an analysis of the parameter space 31 or extraction of the searched elements 33 being able to proceed less computationally intensive.

The transformation into the parameter space 31 can also be effected depending on a kernel density estimation. Herein, not only a vote for a certain element 33 $(\theta,\rho)$ in the parameter space 31 is given by the line element 30 or the regression function 29, but a neighborhood 34 around the certain element $(\theta,\rho)$ is also taken into account and benefits from the vote albeit optionally only proportionally. The rule, according to which the area of the neighborhood 34 is selected and which weighted proportion of the vote the other elements 33 are awarded, which are located in the area of the neighborhood 34, depends on the selected kernel. Often, the weighted proportion of the vote is made depending with respect to the distance of the transformed element 33 to the adjacent element benefiting from the proportional vote. Possible kernels are for example a Gaussian kernel, a Cauchy kernel, a Picard kernel or an Epanechnikov kernel.

In case the length of the line elements 30 of the regression function 29 is included as a parameter in the parameter space 31 and the kernel density estimation is applied, the length can be employed as a multiplier of the kernel.

An exemplary parameter space 31 with the axes $\theta$ and $\rho$ is shown in Fig. 9. For the transformation from the image space 28 into the parameter space 31, a parabolic kernel has been used, wherefore circular elements 33 have been arisen. In the present example, each element 33 in the parameter space 31 represents a line and thus a regression function 29 in the image space 28.

In a following process step 32, searched or important elements 33 of the parameter space 31, which each represent a searched or important object 24 in the image space 28, in the present example the line element 30, are determined in the parameter space 31. This is effected with a clustering method and/or with a non-maximum suppression method and/or with a threshold value method.

The clustering method combines certain areas in the parameter space 31. To this, there is a plurality of possibilities such as for example a k means algorithm and/or a BIRCH (balanced iterative reducing and clustering using hierarchies) algorithm. The non-maximum suppression method pursues the goal to only consider elements 33 of the parameter space 31, which belong to a local optimum. A reduction of the parameter space 31 is also achieved with the threshold value method, wherein elements 33 of the parameter space 31, which are below or above a certain threshold value, are excluded from the further procedure. The object of this last mentioned method is a reduction of the parameter space 31 to the essentials in order to simplify and improve a subsequently following analysis.

In a parallel process step 35, the line elements 30 of the regression function 29 are matched to the edges 19 of the binary image 17. As a result, one obtains marks 36 in the form of coordinates, which each correspond to the point of intersection of the contour 23 of the object 24 of the binary image 17 with the line element 30.

These marks 36 are also transformed into the parameter space 31 in a further process step 37. The purpose of the marks 36 is that elements 33 in the parameter space 31, which are for example present only as a straight line up to now, can now be provided with further parameters such as endpoints 38, and thus are available as a curve bounded at the start and at the end, in the present example as a line segment.

The exemplary parameter space 31, which now contains the parameters $\theta$, $\rho$ and two endpoints per element 33, is finally processed with a higher logic in the process step 39 and finally provided via an API (application programming interface) to a card 40.

However, the parameter space 31 is not restricted to the mentioned parameters. Thus, for example, in case of a regression function 29, which is of higher order than the rectilinear regression function 29 in the cited example, correspondingly more parameters are also required in order to describe the line element 30 or a curve of the regression function 29.

## Claims

1. Method for detecting an object (24) with a predetermined geometric shape in an environmental region of a motor vehicle (1) by means of a camera system (2) of the motor vehicle (1), including the steps of:

   - providing an image (13) of the environmental region by means of a camera (3) of the camera system (2),
   - generating a gradient image (22) from the image (13) by means of an image processing device (4) of the camera system (2),
   - determining a regression function (29) from edges (19) of the gradient image (22) by the image processing device (4), wherein the regression function (29) has a shape corresponding to the geometric shape of the object (24),
   - transforming the regression function (29) from an image space (28) of the gradient image (22) into a parameter space (31) using a predetermined transformation rule by the image processing device (4), and
- detecting the object (24) based on the transformed regression function (29) in the parameter space (31).

**2.** Method according to claim 1,
**characterized in that**
a roadway marking (6) applied to a roadway (8), in particular a parking space marking (27) delimiting a parking space (5) and/or a roadway longitudinal marking (9, 11) delimiting a lane (10), is detected as the object (24) by the camera system (2).

**3.** Method according to claim 1 or 2,
**characterized in that**
at least one of the following objects (24) is detected as the object (24) by the camera system (2):

- an object (24) with at least one rectilinear edge, wherein a rectilinear function is used as the regression function (29), and/or
- an object (24) with an oval, in particular circular, contour, wherein an oval, in particular circular, function is used as the regression function (29), and/or
- an object (24) with a T shaped and/or L shaped contour.

**4.** Method according to any one of the preceding claims,
**characterized in that**
a Hough transformation is used as the transformation rule such that the parameter space (31) corresponds to a Hough space.

**5.** Method according to any one of the preceding claims,
**characterized in that**
the transforming of the regression function (29) includes a kernel density estimation.

**6.** Method according to any one of the preceding claims,
**characterized in that**
the detection of the object (24) in the parameter space (31) includes that values of the parameter space (31) are combined to clusters using a clustering method and the clusters are extracted.

**7.** Method according to any one of the preceding claims,
**characterized in that**
the detection of the object (24) in the parameter space (31) includes that values of the parameter space (31) are extracted using a non-maximum suppression method.

**8.** Method according to any one of the preceding claims,
**characterized in that**
the detection of the object (24) in the parameter space (31) includes that values of the parameter space (31) are compared to a predetermined threshold value and extracted depending on the comparison.

**9.** Method according to any one of the preceding claims,
**characterized in that**
in the image space (28), points of intersection (36) of the regression function (29) on the one hand with the edges (19) of the gradient image (22) on the other hand are determined and transformed into the parameter space (31), wherein a course of the transformed regression function (29) in the parameter space (31) is determined considering the transformed points of intersection (36).

**10.** Camera system (2) for a motor vehicle (1) including at least a camera (3) for providing an image of an environmental region of the motor vehicle (1), and including an image processing device (4), which is adapted to perform a method according to any one of the preceding claims.

**11.** Motor vehicle (1), in particular passenger car, with a camera system (2) according to claim 10.

Fig.1

Fig.2

Fig.3

Fig.4

Fig.5

Fig.6

Fig.7

Fig.8

Fig.9

Europäisches
Patentamt

European
Patent Office

Office européen
des brevets

# EUROPEAN SEARCH REPORT

Application Number

EP 15 16 5780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE J W ET AL: "A lane-departure identification based on LBPE, Hough transform, and linear regression", COMPUTER VISION AND IMAGE UNDERSTANDING, ACADEMIC PRESS, US, vol. 99, no. 3, 1 September 2005 (2005-09-01), pages 359-383, XP027222017, ISSN: 1077-3142 [retrieved on 2005-08-13] * abstract; figure 4 * * Section 2 * | 1-8,10, 11 | INV. G06K9/00 |
| X | US 2014/029852 A1 (PISIPATI RADHA KRISHNA [IN] ET AL) 30 January 2014 (2014-01-30) * 34 and 40; figures 5, 7 * | 1-8,10, 11 | |
| X | US 2013/100286 A1 (LAO YUANWEI [US]) 25 April 2013 (2013-04-25) * 47-49 and 51 * | 1-8,10, 11 | |

TECHNICAL FIELDS
SEARCHED (IPC)

G06K
G06T

The present search report has been drawn up for all claims

| Place of search | Date of completion of the search | Examiner |
|---|---|---|
| The Hague | 19 November 2015 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 15 16 5780

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2015

| Patent document cited in search report | | Publication date | Patent family member(s) | Publication date |
|---|---|---|---|---|
| US 2014029852 | A1 | 30-01-2014 | NONE | |
| US 2013100286 | A1 | 25-04-2013 | NONE | |

EPO FORM P0459

**EP 2 960 827 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3069654 A